# EUROPEAN PATENT APPLICATION

(11) **EP 4 404 122 A1**
(43) Date of publication of application: **24.07.2024**
(21) Application number: 22869710.8
(22) Date of filing: 02.08.2022
(51) Int. Cl.: G06Q 10/10

(54) **DATA MANAGEMENT DEVICE, DATA SHARING SYSTEM AND METHOD, AND DATA MANAGEMENT PROGRAM**

(30) Priority: 16.09.2021 JP 2021150916
(71) Applicant: NTT Communications Corporation, Tokyo 100-8019 (JP)
(72) Inventor: TAKADA, Tomonori, Tokyo 100-8019 (JP); KISHIDA, Tsunechika, Tokyo 100-8019 (JP); AKABORI, Hideaki, Tokyo 100-8019 (JP)
(74) Representative: Nederlandsch Octrooibureau
(86) International application number: PCT/JP2022/029695
(87) International publication number: WO 2023/042562

(57) **Abstract**

In an aspect of the invention, a data management device includes a workflow management processing unit configured to create a workflow for inputting information related to data to be shared from a second user terminal for using data, cause at least part of the information related to the data to be input from the second user terminal through the workflow, cause a first user terminal of a first user who is a data owner to view the workflow after input by the second user terminal, and in response to approval from the first user terminal, permit the second user terminal to access a copy of the data stored in a dedicated storage area that is isolated from the second user and accessible only by the first user, the copy being stored in a shared storage area accessible only by the first user and the second user.

## Description

### FIELD

Embodiments of the present invention relate to a data management device, a data sharing system and method, and a data management program.

### BACKGROUND

Several devices for sharing data among a plurality of user terminals have been proposed.

For example, Patent Literature 1 discloses a device in which the same user data is stored in a plurality of user terminals, and when user data is updated in a user terminal of a certain user (updater), the user data is also updated in user terminals of other users.

Further, Patent Literature 2 discloses a technique in which a symbolic link to user data stored in a user area of one user is stored in a user area of another user to virtually store the user data in the user area of the other user, thereby enabling a viewing/editing operation similar to a case where actual data is stored.

### CITATION LIST

### PATENT LITERATURE

Patent Literature 1: Jpn. Pat. Appln. KOKAI Publication No. 2012-168630
Patent Literature 2: Jpn. Pat. Appln. KOKAI Publication No. 2019-200643

### SUMMARY

### TECHNICAL PROBLEM

In a case of sharing data, first, it is necessary to acquire a sharing agreement between a user who is an owner of the data (hereinafter referred to as a data owner) and a user who uses the data (hereinafter referred to as a data user) by telephone, email, or the like. Then, if the sharing agreement is acquired, the data owner specifies which data is to be shared and with whom the data is to be shared with respect to a data management device that manages the data sharing, thereby enabling the data sharing. Therefore, the workload of the data owner is larger than that of the data user. When there is a request for sharing from a large number of data users, the workload of the data owner increases while the workload of each data user does not change. As the number of pieces of data owned by the data owner increases, the workload of the data owner increases. This increase in workload reduces the motivation of the data owner and hinders the expansion of data sharing.

The present invention has been made in view of the above circumstances, and an object of the present invention is to make it possible to share data among users with less workload on a data owner.

### SOLUTION TO PROBLEM

To solve the problems described above, according to one aspect of the present invention, a data management device configured to manage data sharing between a first user who is an owner of data and a second user who uses the data includes: a communication interface configured to communicate with a first user terminal operated by the first user and a second user terminal operated by the second user; and a controller configured to control the data management device. The controller includes a workflow management processing unit configured to create a workflow for inputting information related to data to be shared from the second user terminal, cause at least part of the information related to the data to be input from the second user terminal through the workflow, cause the first user terminal to view the workflow after input by the second user terminal, and in response to approval from the first user terminal, permit the second user terminal to access a copy of the data stored in a dedicated storage area that is isolated from the second user and accessible only by the first user or a symbolic link to the data stored in the dedicated storage area, the copy or the symbolic link being stored in a shared storage area accessible only by the first user and the second user.

According to one aspect of the present invention, a data sharing system includes a storage including a dedicated storage area and a shared area, and a data management device according to the present invention.
According to one aspect of the present invention, a data sharing method for sharing data between a first user who is an owner of the data and a second user who uses the data, includes, by a computer, creating a workflow for inputting information related to data to be shared from a second user terminal operated by the second user, and causing at least part of the information related to the data to be input from the second user terminal through the workflow, causing a first user terminal operated by the first user to view the workflow after the input by the second user terminal, and in response to approval from the first user terminal, permitting the second user terminal to access a copy of the data stored in a dedicated storage area that is isolated from the second user and accessible only by the first user or a symbolic link to the data stored in the dedicated storage area, the copy or the symbolic link being stored in a shared storage area accessible only by the first user and the second user.

One aspect of a data management program according to the present invention is a program for causing a computer to execute processing by each processing unit included in one aspect of the data management device according to the present invention.

### ADVANTAGEOUS EFFECTS OF INVENTION

According to each aspect of the present invention, the data user is made to input information necessary for sharing the data, while the data owner is only required to perform an approval operation, so that the data can be shared between the users with less workload on the data owner.

### BRIEF DESCRIPTION OF THE DRAWINGS

FIG. 1 is a diagram showing an example of an overall configuration of a data sharing system according to a first embodiment of the present invention.
FIG. 2 is a block diagram showing an example of a hardware configuration of a data management device according to the first embodiment of the present invention.
FIG. 3 is a block diagram showing a software configuration of the data management device according to the first embodiment.
FIG. 4 is a diagram showing an example of contents of a workflow management table created by the data management device according to the first embodiment.
FIG. 5 is a flowchart showing an example of an overall processing procedure of shared area management processing performed by the data management device according to the first embodiment.
FIG. 6 is a flowchart showing an example of a processing procedure of shared area creation processing of the overall processing procedure shown in FIG. 5.
FIG. 7 is a flowchart showing an example of a processing procedure of shared area access processing of the overall processing procedure shown in FIG. 5.
FIG. 8 is a flowchart showing an example of a processing procedure of shared area deletion processing of the overall processing procedure shown in FIG. 5.
FIG. 9 is a block diagram showing an example of a software configuration of a data management device according to a second embodiment of the present invention.
FIG. 10 is a flowchart showing an example of an overall processing procedure of shared area management processing performed by the data management device according to the second embodiment.
FIG. 11 is a flowchart showing an example of a processing procedure of abnormality detection processing of the overall processing procedure shown in FIG. 10.
FIG. 12 is a flowchart showing an example of a processing procedure of abnormality handling shared area creation processing of the overall processing procedure shown in FIG. 10.
FIG. 13 is a flowchart showing an example of part of a processing procedure of shared area deletion processing of the overall processing procedure shown in FIG. 10.

### DETAILED DESCRIPTION

Embodiments of the present invention will be described below with reference to the drawings.

### <First Embodiment>

### (Configuration Example)

### (1) System

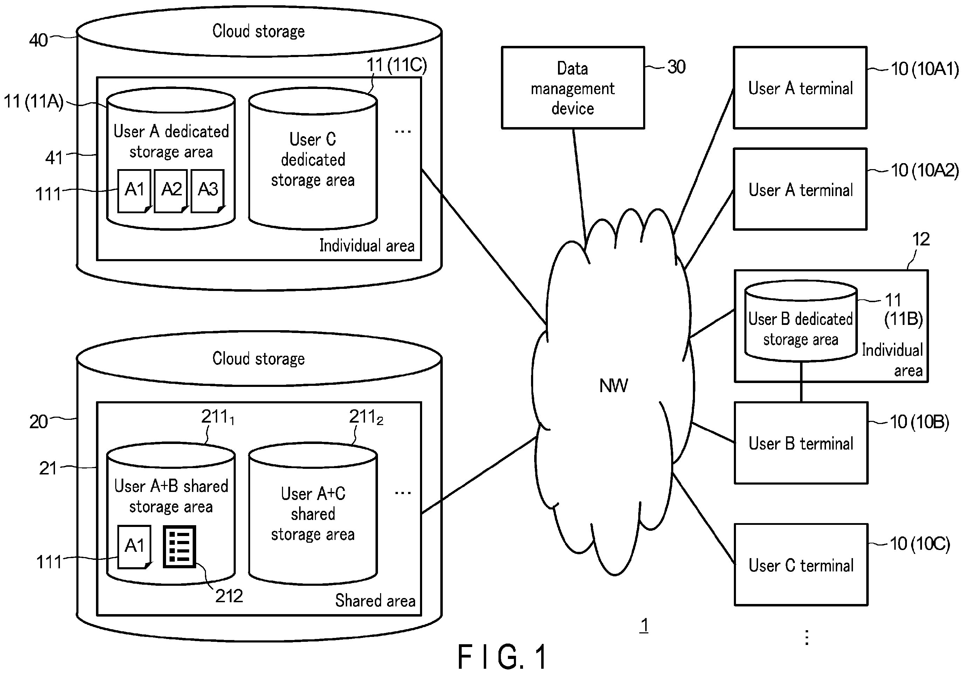

FIG. 1 is a diagram showing an overall configuration of a data sharing system according to a first embodiment of the present invention. The data sharing system 1 provides data sharing among a plurality of users.

The data sharing system 1 includes, for example, user A terminals 10A and 10B, a user B terminal 10B, a user C terminal 10C, etc., a cloud storage 20, a data management device 30 according to the first embodiment of the present invention, and a cloud storage 40. If the user A terminals 10A and 10A2, the user B terminal 10B, the user C terminal 10C, etc. are not particularly distinguished from each other, they are simply referred to as a user terminal 10. The user terminals 10, the cloud storage 20, the data management device 30, and the cloud storage 40 are connected to one another via a network NW.

Users A, B, C, ... are, for example, different companies. Each user terminal 10 is a personal computer (PC) located in a different company. FIG. 1 shows two user terminals 10 in the company of the user A and one user terminal 10 in each of the companies of the users B, C, ...; however, any number of user terminals 10 may be present in each company.

In addition, the data sharing system 1 may be formed as a system in one company. In this case, each user terminal 10 can be located in each branch office in one company, or can be located in a separate department in one company.

The data sharing system 1 includes, for each user, a dedicated storage area isolated from the other user terminals 10. That is, the data sharing system 1 includes a user A dedicated storage area 11A dedicated to the user A terminals 10A and 10B, a user B dedicated storage area 11B dedicated to the user B terminal 10B, a user C dedicated storage area 11C dedicated to the user C terminal 10C, etc., each of which stores at least one data file. The dedicated storage area of each user terminal 10 may be provided in a cloud storage or may be provided in an in-house server or the like corresponding to the user terminal 10. In the example of FIG. 1, the user A dedicated storage area 11A, the user C dedicated storage area 11C, etc. are provided in an individual area 41 of the cloud storage 40, and the user B dedicated storage area 11B is provided in an individual area 12 of a user B server (not shown). Here, the individual areas 12 and 41 are storage areas connected to the network NW and dedicated to the respective users, and are isolated from the other users. The individual area 12 is connected to the user B terminal 10B via an in-house local area network (LAN) or the like. If the user A dedicated storage area 11A, the user B dedicated storage area 11B, the user C dedicated storage area 11C, etc. are not particularly distinguished from each other, they are simply referred to as a user dedicated storage area 11.

The cloud storage 20 is a first storage device including a shared area 21. The shared area 21 is a storage area for storing shared data to be shared among the plurality of user terminals 10. For example, the shared area 21 includes a user A+B shared storage area 211₁ that the user A terminals 10A1 and 10A2 share with the user B terminal 10B, a user A+C shared storage area 2112 that the user A terminals 10A1 and 10A2 shares with the user C terminal 10C, etc. If the user A+B shared storage area 211₁, the user A+C shared storage area 21 1z, etc. are not particularly distinguished from each other, they are simply referred to as a user shared storage area 211. The user shared storage area 211 is an area that can be accessed only by specific users who are subjects of sharing. For example, the user A+B shared storage area can be accessed by the user A terminals 10A1 and 10A2 and the user B terminal 10B, but cannot be accessed by the user C terminal 10C, and even its existence is concealed from the user terminals 10 of users other than the user A and the user B. Each of these user shared storage areas 211 is created for each piece of shared data. Thus, for example, areas shared by the user A terminals 10A and 10B with the user B terminal 10B may include a second user A+B shared storage area (not shown) in addition to the user A+B shared storage area 211₁.

Here, the individual area 41 is formed in the cloud storage 40, which is a second storage device physically different from the cloud storage 20, which is the first storage device including the shared area 21. However, the individual area 41 may be, by being logically separated, formed in the cloud storage 20 in which the shared area 21 is formed. Also, the individual area 12 may be formed in the individual area 41 of the cloud storage 40, or may be formed in the cloud storage 20 by being logically separated.

The data management device 30 starts up a workflow for a sharing agreement in response to a workflow creation request from any one of the user terminals 10 that are terminals of data users. Then, the data management device 30 passes the workflow between the user terminal 10 of the data user and the user terminal 10 that is the terminal of the data owner, thereby acquiring the agreement for data sharing. If the agreement for data sharing is acquired, the data management device 30 creates a shared storage area shared by the user terminal 10 that is the terminal of the data owner and the other user terminal 10 that is the terminal of the data user in the shared area 21 of the cloud storage 20.

For example, it is assumed that the user A stores three data files 111 of A1, A2, and A3 in the user A dedicated storage area 11A, and the user B directly or indirectly knows the existence of the A1 data file 111 from the user A. If the user B wants to use the A1 data file 111, the user B transmits a workflow creation request from its own user B terminal 10B to the data management device 30. In response to the workflow creation request from the user B terminal 10B, the data management device 30 starts up the workflow and allows the user B terminal 10B to input use conditions. As the use conditions, for example, information such as the data to be shared (the A1 data file 111), the owner of the data (user A), and depending on circumstances, the use period (the number of days and/or the number of accesses), the use fee, and the like, are input. Then, the data management device 30 sends the workflow in which the use conditions are described to the user terminal(s) of user(s) registered as approvers of the A1 data file 111, for example, the user A terminal 10A1, and acquires approval. If the approval is acquired, the data management device 30 determines that the agreement for data sharing is acquired, and creates the user A+B shared storage area 211₁ shared by the user A and the user B in the shared area 21 of the cloud storage 20 based on the workflow.

Further, based on the workflow, the data management device 30 stores the data to be shared, for example, the A1 data file 111 in the shared storage area created in the shared area 21 of the cloud storage 20, for example, the user A+B shared storage area 211₁. Further, the data management device 30 stores a workflow management table 212 describing the management information of the workflow in the created shared storage area, for example, the user A+B shared storage area 211₁. If the user terminal 10 as a data user performs a viewing/editing operation on the shared data, the data management device 30 adds the operation history to the workflow management table 212.

### (2) Data Management Device 30

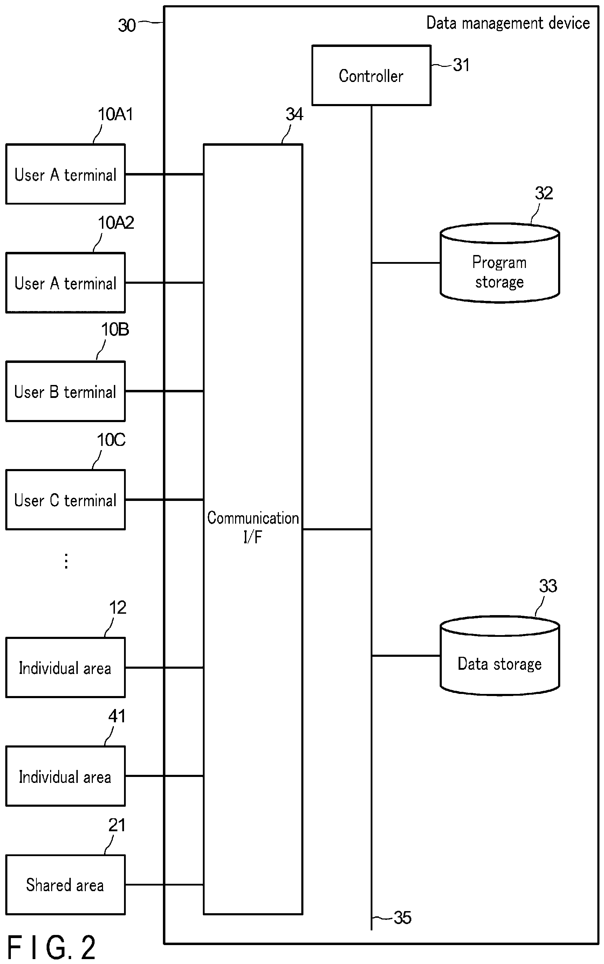

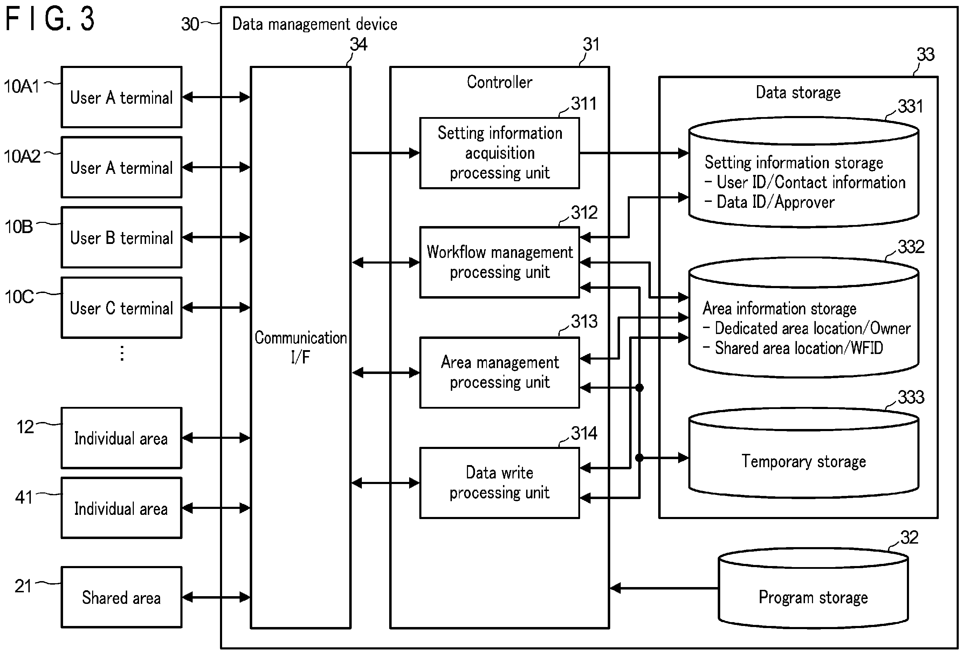

FIGS. 2 and 3 are block diagrams showing examples of a hardware configuration and a software configuration of the data management device 30, respectively.

The data management device 30 includes a controller 31 including a hardware processor such as a central processing unit (CPU). The data management device 30 is connected to the controller 31, via a bus 35, to a storage unit including a program storage 32 and a data storage 33, and to a communication interface (hereinafter, abbreviated as communication I/F) 34.

The communication I/F 34 performs transmission of various data among the user terminals 10, the cloud storage 20, and the individual areas 12 and 41, using a communication protocol defined by the network NW under the control of the controller 31.

The program storage 32 is formed by combining, as a storage medium, for example, a nonvolatile memory which can be written to and read from whenever required, such as a hard disk drive (HDD) or a solid state drive (SSD), and a nonvolatile memory such as a read only memory (ROM). The program storage 32 stores middleware such as an operating system (OS), and in addition, programs necessary for executing various control processing according to the first embodiment of the present invention.

The data storage 33 is formed by combining, as a storage medium, for example, a nonvolatile memory which can be written to and read from whenever required, such as an HDD or an SSD, and a volatile memory such as a random access memory (RAM). This data storage 33 includes a setting information storage 331, an area information storage 332, and a temporary storage 333 as storage units necessary for implementing the first embodiment of the present invention.

The setting information storage 331 is used to store user setting information for each registered user who uses the data management device 30 and data setting information for each piece of data stored in the individual areas 12 and 41.

The user setting information includes at least a user ID and contact information of the user. The user ID is identification information for uniquely identifying a registered user. Here, the registered user is, for example, a contract user who uses the data sharing system 1 including the data management device 30 with payment of a predetermined use fee, and who can be a user of the user terminal 10. The user ID is a number, a character string recognizable by a person, or a combination of a character string and a number, which is assigned by the data management device 30 at the time of user registration. The user ID may be a name that is designated discretionarily by the user and does not overlap with any other registered users. The contact information may be, for example, an email address. Further, the user setting information may include authentication information such as a password for authentication or the like. In addition, the user setting information may include payment information such as an account for settlement or a card number for the use fee, personal information such as a company name, a department, an address, a name, and a telephone number, and the like.

The data setting information includes at least a data ID and an approver who approves sharing. The data ID is identification information for uniquely identifying data. The data ID may be a file name of a data file, or may be a number, a character string recognizable by a person, or a combination of a character string and a number, which is assigned by the data management device 30 when the data file is stored in the individual area 12 or 41. The approver is a user ID of a registered user who performs approval, and there may be a plurality of approvers. For example, in order to share the A1 file 111 with another user, there is a case where not only the approval of the registered user of the user A terminal 10A1 but also the approval of the registered user of the user A terminal 10A2, which is a supervisor of the user A terminal 10A1, is required. In such a case, the approvers are two user IDs of the user A terminal 10A1 and the user A terminal 10A2. In a system in which the number of approvers is limited to one, not the approver but a contact information may be stored for each data ID. The data setting information may include a data type such as log data and document data, date information such as a creation date and a registration date, owner information which is the same as or different from approver information, and the like.

The area information storage 332 is used to store area information related to each user dedicated storage area 11 of each user terminal 10 created in the individual areas 12 and 41 and area information related to each user shared storage area 211 between a plurality of user terminals 10 created in the shared area 21 of the cloud storage 20.

The area information related to the user dedicated storage area 11 includes at least a dedicated area location and an owner. The dedicated area location is address information for specifying a storage location of the user dedicated storage area 11 to access the user dedicated storage area 11 via the network NW. This may include an IP address of the cloud storage 40 or the user B server (not illustrated), a physical/logical location such as a drive letter or a folder name of an HDD or an SSD, and the like. The owner is identification information for specifying the user of the user dedicated storage area 11, and may be a user ID.

The area information related to the user shared storage area 211 includes at least a shared area location and a workflow ID. In FIG. 3 and the subsequent figures, the workflow is abbreviated as WF. The shared area location is address information for specifying a storage location of the user shared storage area 211 to access the user shared storage area 211 via the network NW. This may include an IP address of the cloud storage 20, a physical/logical location such as a drive letter or a folder name of an HDD or an SSD, etc. The workflow ID is identification information for specifying a workflow for a sharing agreement. This may be a uniquely assigned number, a character string recognizable by a person, or a combination of a character string and a number.

The temporary storage 333 is used to temporarily store various data and information generated during processing by the controller 31.

The controller 31 includes, as processing functions according to the first embodiment of the present invention, a setting information acquisition processing unit 311, a workflow management processing unit 312, an area management processing unit 313, and a data write processing unit 314. These processing units 311 to 314 are all realized by, for example, causing the hardware processor of the controller 31 to execute programs stored in the program storage 32.

The setting information acquisition processing unit 311 performs a process of receiving, via the communication I/F 34, an instruction for setting user setting information or data setting information transmitted from each user terminal 10 via the network NW. The setting information acquisition processing unit 311 further performs a process of storing the user or data setting information included in the received instruction for setting in the setting information storage 331.

The workflow management processing unit 312 receives, via the communication I/F 34, a workflow creation request transmitted from the user terminal 10 of each data user and transferred via the network NW. Furthermore, in response to reception of the workflow creation request, the workflow management processing unit 312 creates a workflow for a sharing agreement and stores the workflow in the temporary storage 333. Then, the workflow management processing unit 312 performs a process of acquiring a sharing agreement by passing the workflow between the data user and the data owner. To be specific, the workflow management processing unit 312 transmits, to the user terminal 10 which is the request source via the network NW using the communication I/F 34, workflow screen information for displaying the workflow on a Web browser screen of the user terminal 10. In addition, upon receiving information such as data desired to be shared and a data owner or the like input on the Web browser screen of the workflow in the user terminal 10, the workflow management processing unit 312 stores the received information in the temporary storage 333 as description contents of the workflow. Furthermore, the workflow management processing unit 312 transmits, to the user terminal 10 of the data owner via the network NW using the communication I/F 34, the workflow screen information for displaying the workflow in which these pieces of information are described on the Web browser screen in the user terminal 10. Then, the workflow management processing unit 312 performs a process of receiving an approval operation on the Web browser screen of the workflow in the user terminal 10.

The area management processing unit 313 performs a process of transmitting, to the cloud storage 20 via the network NW using the communication I/F 34, an instruction to create the user shared storage area 211 based on the descriptions of the workflow stored in the temporary storage 333, if the sharing agreement is acquired in the workflow. As a result, the user shared storage area 211 among the plurality of user terminals 10 is created in the shared area 21 of the cloud storage 20. Further, the area management processing unit 313 performs a process of storing the area information related to the created user shared storage area 211 in the area information storage 332.

The data write processing unit 314 reads the data file 111 of data to be shared from the user dedicated storage area 11 of the data owner via the network NW using the communication I/F 34 based on the descriptions of the workflow stored in the temporary storage 333, and stores the data file 111 in the temporary storage 333. The data write processing unit 314 further performs a process of determining the corresponding user shared storage area 211 created in the cloud storage 20 based on the area information related to the user shared storage area 211 stored in the area information storage 332. Then, the data write processing unit 314 performs a process of writing the data file 111 stored in the temporary storage 333 into the user shared storage area 211 via the network NW using the communication I/F 34. In addition, the data write processing unit 314 performs a process of writing the description contents of the workflow stored in the temporary storage 333 into the user shared storage area 211 as the workflow management table 212 via the network NW using the communication I/F 34.

### (3) Workflow Management Table 212

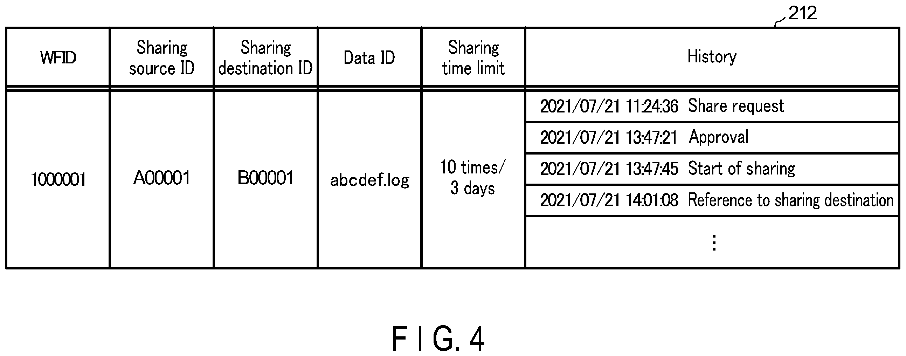

FIG. 4 is a diagram showing an example of the contents of the workflow management table 212 that is created by the data management device 30 and stored in the user shared storage area 211. The workflow management table 212 includes information of a workflow ID, a sharing source ID, a sharing destination ID, a data ID, a sharing time limit, and a history.

Here, the workflow ID is identification information for identifying the workflow management table 212, and corresponds to the workflow ID in the area information stored in the area information storage 332. The sharing source ID is identification information indicating a data owner, and the sharing destination ID is identification information indicating a data user, each of which corresponds to a user ID in the user setting information stored in the setting information storage 331. The data ID is identification information for identifying the data file 111 that is the shared data stored in the user shared storage area 211, and corresponds to the data ID in the data setting information stored in the setting information storage 331.

The sharing time limit is information indicating how long sharing of data is permitted, and can be set as the number of accesses and/or the number of days from the start of sharing. This sharing time limit can be set if the data user inputs a desired time limit and the data owner approves it when the sharing agreement is acquired. The sharing time limit may be set as a predetermined value regardless of the input by the data user. The sharing time limit may be stored by converting the number of days into an actual date.

The history is a history of operations performed through the workflow. The workflow management processing unit 312 adds a history to the workflow management table 212 via the network NW using the communication I/F 34 each time the data user accesses the data file 111, which is shared data, from the user terminal 10, and performs a viewing/editing operation.

The area management processing unit 313 reads the workflow management table 212 via the network NW using the communication I/F 34 based on the area information stored in the area information storage 332, and performs processing based on the sharing time limit. This process includes, for example, a process of deleting the corresponding user shared storage area 211 by transmitting an instruction to delete the user shared storage area 211 to the cloud storage 20 via the network NW by the communication I/F 44 after the sharing time limit has expired. If the sharing time limit is designated by the number of times, the area management processing unit 313 can determine whether or not the sharing time limit has expired by comparing the number of histories after the sharing start in the history with the designated number of times. If the sharing time limit is designated by the number of days, the area management processing unit 313 can determine whether or not the sharing time limit has expired by comparing the number of days after the start of sharing in the history with the designated number of days. If the sharing time limit is specified by both the number of times and the number of days, the area management processing unit 313 determines that the sharing time limit has expired if one of the numbers exceeded the limit.

### (Operation Example)

Next, an operation of the data sharing system 1 having the above configuration will be described.

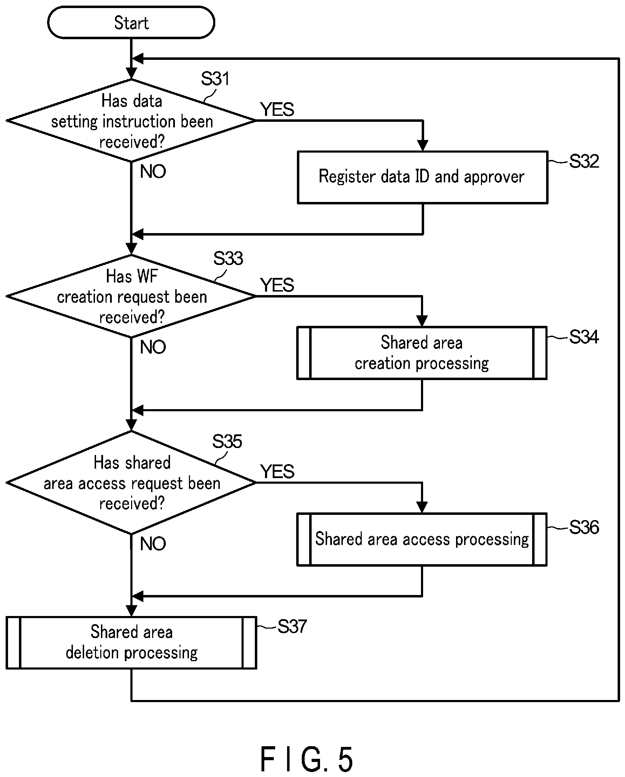

A user registration operation, an authentication operation when using the data sharing system 1, a file operating operation such as saving or reading a data file in or from the corresponding user dedicated storage area 11, and the like from each user terminal 10 are known, and thus description thereof will be omitted. Hereinafter, a processing operation of the data management device 30 related to the sharing of the shared data among the plurality of user terminals 10 will be described with reference to flowcharts shown in FIGS. 5 to 8.

First, an overall processing procedure of the data management device 30 will be described. FIG. 5 is a flowchart showing an example of an overall processing procedure of shared area management processing performed by this data management device 30.

In step S31, under the control of the setting information acquisition processing unit 311, the controller 31 of the data management device 30 determines whether or not a setting instruction for data setting information transmitted from any one of the user terminals 10 and transferred via the network NW has been received via the communication I/F 34. The user who is the data owner can perform authentication from the user terminal 10, select the setting of the data setting information on a menu screen after the authentication, and input the data setting information on a setting screen to which the process proceeds according to the selection. Although not particularly illustrated, the controller 31 may have a function of a Web server that provides the user terminal 10 with an authentication screen, a menu screen, and a setting screen, as a Web browser screen. Then, an instruction for setting the data setting information is transmitted from the user terminal 10 in response to a predetermined transmission operation on the setting screen of the Web browser. If it is determined that the setting instruction for data setting information has been received, the controller 31 determines YES in step S31, and proceeds to the processing operation in step S32. If it is determined that the setting instruction for data setting information has not been received, the controller 31 determines NO in step S31 and proceeds to the process operation in step S33.

In step S32, under the control of the setting information acquisition processing unit 311, the controller 31 registers the data ID and the approver based on the received instruction for setting the data setting information. That is, based on the designation of the data file 111 to be set and the user ID of the user who is the approver in the setting instruction, the controller 31 causes the setting information storage 331 to store the corresponding data ID and approver. Thereafter, the controller 31 proceeds to the processing operation of step S33.

In step S33, under the control of the workflow management processing unit 312, the controller 31 determines whether or not a workflow creation request transmitted from any one of the user terminals 10 and transferred via the network NW has been received via the communication I/F 34. The user who desires to use the data performs authentication from the user terminal 10 and performs, for example, a predetermined share request operation on the menu screen after the authentication, whereby the workflow creation request is transmitted from the user terminal 10. If it is determined that the workflow creation request has been received, the controller 31 determines YES in step S33 and proceeds to the processing operation in step S34. If it is determined that the workflow creation request has not been received, the controller 31 determines NO in step S33 and proceeds to the process operation in step S35.

In step S34, the controller 31 performs shared area creation processing under the control of the workflow management processing unit 312, the area management processing unit 313, and the data write processing unit 314. This shared area creation processing is a processing operation of starting up a workflow, acquiring a sharing agreement between the data owner and the data user, creating the user shared storage area 211, and storing shared data. Details of the shared area creation processing will be described later. Thereafter, the controller 31 proceeds to the processing operation of step S35.

In step S35, under the control of the workflow management processing unit 312, the controller 31 determines whether or not a shared area access request transmitted from the user terminal 10 of the data user and transferred via the network NW has been received via the communication I/F 34. The user who is the data user performs authentication from the user terminal 10 and performs, for example, a predetermined shared area access operation on the menu screen after the authentication, so that the shared area access request is transmitted from the user terminal 10. If it is determined that the shared area access request has been received, the controller 31 determines YES in step S35 and proceeds to the processing operation in step S36. If it is determined that the shared area access request has not been received, the controller 31 determines NO in step S35 and proceeds to the processing operation in step S37.

In step S36, the controller 31 performs a shared area access processing under the control of the workflow management processing unit 312 and the data write processing unit 314. This shared area access processing is a processing operation of causing the user terminal 10 of the data user to perform a viewing/editing operation on the shared data stored in the user shared storage area 211 and adding the operation history to the workflow management table 212. Details of the shared area access processing operation will be described later. Thereafter, the controller 31 proceeds to the processing operation of step S37.

In step S37, the controller 31 performs shared area deletion processing under the control of the workflow management processing unit 312, the area management processing unit 313, and the data write processing unit 314. The shared area deletion processing is a processing operation for deleting user shared storage area 211 that stores shared data which the sharing time limit has expired, if any, from among the shared data stored in the user shared storage area 211. Details of the shared area deletion processing will be described later. Thereafter, the controller 31 proceeds to the processing operation of step S31.

### (1) Shared Area Creation Processing

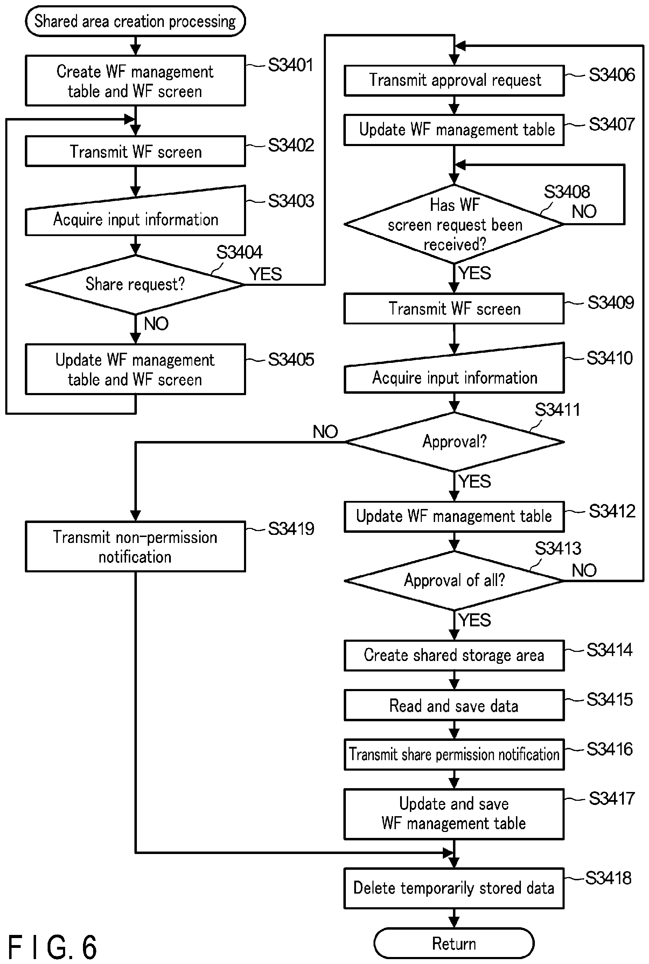

FIG. 6 is a flowchart showing an example of a processing procedure of the shared area creation processing in the above step S34 that is performed by the controller 31 of the data management device 30.

Under the control of the workflow management processing unit 312, the controller 31 first starts up a workflow in step S3401, that is, creates a workflow management table and workflow screen information. In the workflow management table, a workflow ID and a sharing destination ID are described. The workflow ID is automatically generated by the controller 31. The sharing destination ID is a user ID of an authenticated registered user who operates the user terminal 10 that has transmitted the workflow creation request, and can be acquired from the setting information storage 331. The controller 31 stores the created workflow management table and workflow screen information in the temporary storage 333.

Next, in step S3402, under the control of the workflow management processing unit 312, the controller 31 transmits the workflow screen information to the user terminal 10 via the network NW using the communication I/F 34.

Then, in step S3403, under the control of the workflow management processing unit 312, the controller 31 acquires, via the communication I/F 34, input information which is input on the Web browser screen of the workflow in the user terminal 10 and is transmitted from the user terminal 10 via the network NW. The controller 31 stores the acquired input information in the temporary storage 333. The input information is, for example, information on data to be shared, such as data desired to be shared, a data owner, and the like. The input information may be a share request by a predetermined share request operation after the end of input.

In step S3404, the controller 31 determines whether or not the input information is a share request under the control of the workflow management processing unit 312. If it is determined that the input information is not a share request, the controller 31 determines NO in step S3404 and proceeds to the processing operation in step S3405. If it is determined that the input information is a share request, the controller 31 determines YES in step S3404 and proceeds to the processing operation in step S3406.

In step S3405, the controller 31 updates the workflow management table and the workflow screen information stored in the temporary storage 333 based on the input information stored in the temporary storage 333 under the control of the workflow management processing unit 312. For example, if the input information is information specifying a user having data desired to be shared, the controller 31 updates the sharing source ID in the workflow management table to the user ID of the specified user. Also, for example, if the input information is information specifying data desired to be shared, the controller 31 updates the data ID in the workflow management table to the data ID of the specified data. Furthermore, for example, if the input information is information specifying a period desired to be shared, the controller 31 updates the sharing time limit in the workflow management table to the specified period. Thereafter, the controller 31 proceeds to the processing operation of step S3402, and transmits the updated workflow screen information to the user terminals 10 via the network NW using the communication I/F 34.

In step S3406, under the control of the workflow management processing unit 312, the controller 31 transmits an approval request via the network NW using the communication I/F 34 to the approver who approves the sharing agreement for the data indicated by the data ID in the workflow management table stored in the temporary storage 333. That is, the controller 31 acquires the user ID of the user stored as the approver of the data ID from the setting information storage 331, further acquires the contact information of the user ID from the setting information storage 331, and transmits the approval request to the contact. The approval request may include a workflow ID for identifying the workflow. The approval request may also include an IP address which is link information to the workflow screen information of the workflow indicated by the workflow ID.

Then, in step S3407, the controller 31 updates the workflow management table stored in the temporary storage 333 under the control of the workflow management processing unit 312. Here, the controller 31 adds the history of the share request to the workflow management table.

Thereafter, under the control of the workflow management processing unit 312, in step S3408, the controller 31 waits to receive a workflow screen request in response to the approval request from the user terminal 10, using the communication I/F 34 via the network NW. For example, the user terminal 10 of the user who is the approver and has received the approval request including the workflow ID can receive the input of the workflow ID on an approver screen to which the process has proceeded in response to the selection of the approver operation on the menu screen after the user authentication. Then, the user terminal 10 transmits the workflow screen request including the input workflow ID. The controller 31 determines whether or not the workflow screen request has been received. If it is determined that the workflow screen request has not been received, the controller 31 determines NO in step S3408 and repeats the processing operation of step S3408. If it is determined that the workflow screen request has been received, the controller 31 determines YES in step S3408 and proceeds to the processing operation in step S3409.

If the approval request includes link information to the workflow screen information, the user terminal 10 of the user who has received the approval request transmits the workflow screen request for requesting the workflow screen information of the workflow ID indicated by the link information in response to the selection operation of the link information. In this case, since the authentication of the user has not yet been completed, the controller 31 transmits screen information for user authentication to the user terminal 10 to execute predetermined authentication processing, and if the user authentication is completed, the controller 31 determines YES in step S3408 and proceeds to the processing operation of step S3409.

In step S3409, under the control of the workflow management processing unit 312, the controller 31 transmits the workflow screen information to the user terminal 10 via the network NW using the communication I/F 34.

In step S3410, under the control of the workflow management processing unit 312, the controller 31 acquires, via the communication I/F 34, the input information transmitted from the user terminal 10 via the network NW. The controller 31 stores the acquired input information in the temporary storage 333. The input information is information input on the Web browser screen of the workflow in the user terminal 10, and specifically, is either approval of sharing or disapproval of sharing.

In step S3411, the controller 31 determines under the control of the workflow management processing unit 312 whether or not the input information indicates approval of sharing. If it is determined that the input information is disapproval, the controller 31 determines NO in step S3411 and proceeds to the processing operation in step S3419. If it is determined that the input information is approval of sharing, the controller 31 determines YES in step S3411 and proceeds to the processing operation in step S3412.

Then, in step S3412, the controller 31 updates the workflow management table stored in the temporary storage 333 under the control of the workflow management processing unit 312. Here, the controller 31 adds a history of approval of the share request to the workflow management table.

Thereafter, in step S3413, under the control of the workflow management processing unit 312, the controller 31 determines whether or not approval of data sharing has been obtained from all approvers set for the data ID. If it is determined that approval has not been obtained from all the approvers, the controller 31 determines NO in step S3413, proceeds to the processing operation of step S3406, and transmits an approval request to an approver from whom approval has not been obtained. If it is determined that approval has been obtained from all the approvers, the controller 31 determines YES in step S3413 and proceeds to the processing operation in step S3414.

In step S3414, under the control of the area management processing unit 313, the controller 31 creates, in the shared area 21 of the cloud storage 20, the user shared storage area 211 that is a storage area shared between the sharing source user terminal 10 and the sharing destination user terminal 10. In addition, the controller 31 causes the area information storage 332 to store area information about the user shared storage area 211. The creation of the user shared storage area 211 can be performed by the controller 31 transmitting an instruction to create the user shared storage area 211 to the cloud storage 20 via the network NW using the communication I/F 34 based on the workflow management table stored in the temporary storage 333. Thereafter, the controller 31 proceeds to a processing operation in step S3415.

In step S3415, under the control of the data write processing unit 314, the controller 31 reads out the data file 111 of shared data from the user dedicated storage area 11 of the sharing source via the network NW using the communication I/F 34, and saves the read data file in the user shared storage area 211 of the sharing destination. Specifically, based on the workflow management table stored in the temporary storage 333, the controller 31 first reads out the data file 111 of shared data from the corresponding user dedicated storage area 11 via the network NW using the communication I/F 34, and stores the read data file in the temporary storage 333. In addition, the controller 31 specifies the user shared storage area 211 serving as a saving destination based on the area information stored in the area information storage 332. Then, the controller 31 writes the data file 111 stored in the temporary storage 333 to the specified user shared storage area 211 via the network NW using the communication I/F 34.

Thereafter, in step S3416, under the control of the workflow management processing unit 312, the controller 31 transmits, using the communication I/F 34 via the network NW, a share permission notification to the data user indicated by the sharing destination ID in the workflow management table stored in the temporary storage 333. That is, the controller 31 acquires the contact information of the user ID corresponding to the sharing destination ID from the setting information storage 331, and transmits the share permission notification to the contact. The share permission notification can include a workflow ID for accessing, from the Web browser screen of the workflow, the data file 111 which is the shared data stored in the user shared storage area 211.

In step S3417, the controller 31 updates the workflow management table stored in the temporary storage 333 under the control of the workflow management processing unit 312 and the data write processing unit 314. Then, the controller 31 saves the updated workflow management table as the workflow management table 212 in the corresponding user shared storage area 211 via the network NW using the communication I/F 34. The updating of the workflow management table here is to add a history of the start of sharing.

Thereafter, in step S3418, under the control of the data write processing unit 314, the controller 31 deletes the temporary storage information stored in the temporary storage 333 in each processing operation in the shared area creation processing in step S34. Then, the controller 31 ends the processing operation of the shared area creation processing, and proceeds to the processing operation of step S35.

If it is determined in step S3411 that the input information is disapproval, the controller 31 proceeds to the processing operation in step S3419 as described above. In step S3419, under the control of the workflow management processing unit 312, the controller 31 transmits, using the communication I/F 34 via the network NW, a share non-permission notification to the data user indicated by the sharing destination ID in the workflow management table stored in the temporary storage 333. It is preferable that the workflow screen be configured to allow input information of the reason for non-permission to be also acquired from the user terminal 10, so that the reason for non-permission can also be transmitted when the share non-permission notification is transmitted. Thereafter, the controller 31 proceeds to the processing operation of step S3418.

### (2) Shared Area Access Processing

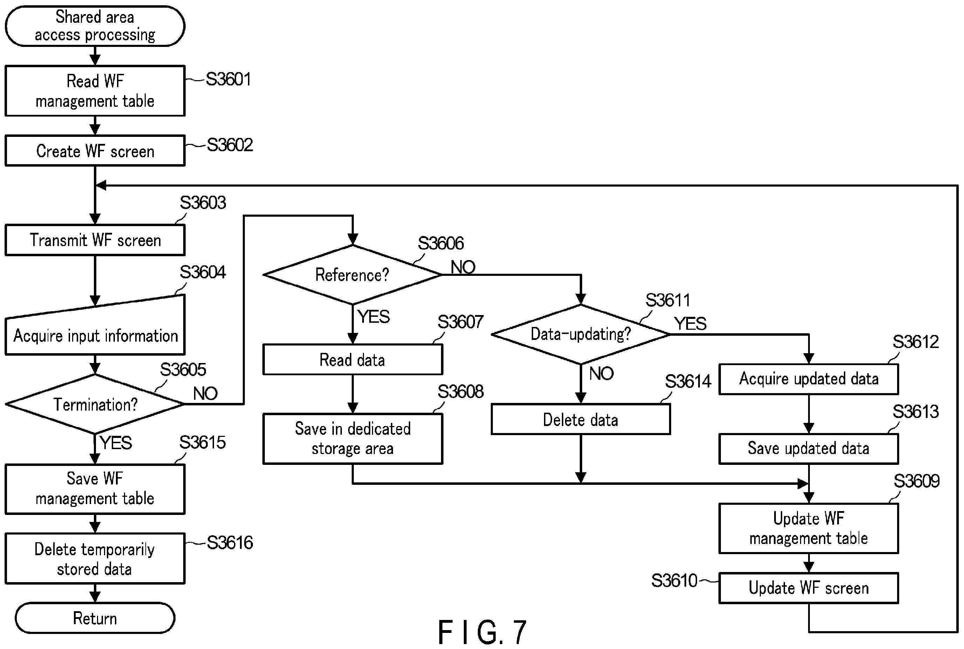

FIG. 7 is a flowchart showing an example of a processing procedure of the shared area access processing in the above step S36 that is performed by the controller 31 of the data management device 30.

In step S3601, under the control of the workflow management processing unit 312, the controller 31 reads the workflow management table 212 from the corresponding user shared storage area 211 via the network NW using the communication I/F 34 based on the shared area access request from the user terminal 10. Based on the workflow ID included in the shared area access request, the controller 31 can check the user shared storage area 211 from which the workflow management table 212 is to be read using the shared area location stored in the area information storage 332 in association with the workflow ID. The controller 31 stores the read workflow management table 212 in the temporary storage 333.

In step S3602, under the control of the workflow management processing unit 312, the controller 31 creates a workflow screen for shared data operation based on the contents of the workflow management table stored in the temporary storage 333.

Next, in step S3603, under the control of the workflow management processing unit 312, the controller 31 transmits, via the network NW using the communication I/F 34, the workflow screen information to the user terminal 10 of the data user which is the request source.

In step S3604, under the control of the workflow management processing unit 312, the controller 31 acquires, via the communication I/F 34, the input information transmitted from the user terminal 10 via the network NW. The input information is information input on the Web browser screen of the workflow in the user terminal 10. The input information includes, for example, an instruction for a reference to the data file 111 which is shared data, an instruction for an updating of the data file 111, an instruction for a deletion of the data file 111, an instruction for a termination of access, and the like. Although not particularly shown in FIG. 7, the input information may include another operation instruction for the shared data, such as renaming of the data file 111. The controller 31 stores the acquired input information in the temporary storage 333.

In step S3605, under the control of the workflow management processing unit 312, the controller 31 determines whether or not the input information is a termination. If it is determined that the input information is a termination, the controller 31 determines NO in step S3605 and proceeds to the processing operation in step S3615. If it is determined that the input information is not a termination, the controller 31 determines YES in step S3605 and proceeds to the processing operation in step S3606.

In step S3606, under the control of the workflow management processing unit 312, the controller 31 determines whether or not the input information is a reference. If it is determined that the input information is not a reference, the controller 31 determines NO in step S3606 and proceeds to the processing operation in step S3611. If it is determined that the input information is a reference, the controller 31 determines YES in step S3606 and proceeds to the processing operation in step S3607.

In step S3607, under the control of the data write processing unit 314, the controller 31 reads, via the network NW using the communication I/F 34, the data file 111 which is the shared data from the user shared storage area 211 based on the contents of the workflow management table stored in the temporary storage 333. The controller 31 can acquire, from the area information storage 332, the shared area location of the user shared storage area 211 from which the data file 111 is read out, based on the workflow ID described in the workflow management table. The controller 31 stores the read data file 111 in the temporary storage 333.

In step S3608, under the control of the data write processing unit 314, the controller 31 saves, in the user dedicated storage area 11 of the data user via the network NW using the communication I/F 34, the data file 111 which is the shared data stored in the temporary storage 333. The controller 31 can acquire the location of the user dedicated storage area 11 of each user from the area information storage 332 based on the user ID indicated by the sharing destination ID described in the workflow management table stored in the temporary storage 333.

Thereafter, in step S3609, the controller 31 updates the workflow management table stored in the temporary storage 333 under the control of the workflow management processing unit 312. For example, a history of a reference to the sharing destination is added.

In step S3610, the controller 31 updates the workflow screen based on the workflow management table stored in the temporary storage 333 under the control of the workflow management processing unit 312. Thereafter, the controller 31 proceeds to the processing operation of step S3603, and transmits the updated workflow screen information to the user terminal 10 of the data user via the network NW using the communication I/F 34.

In step S3611, under the control of the workflow management processing unit 312, the controller 31 determines whether or not the input information is a data-updating. If it is determined that the input information is not a data-updating, the controller 31 determines NO in step S3611 and proceeds to the processing operation in step S3614. If it is determined that the input information is a data-updating, the controller 31 determines YES in step S3611, and proceeds to the processing operation in step S3612.

In step S3612, under the control of the workflow management processing unit 312, the controller 31 acquires updated data from the user terminal 10 of the data user via the network NW using the communication I/F 34, and stores the acquired updated data in the temporary storage 333. For example, in the user terminal 10 of the data user, updated data can be set on the Web browser screen of the workflow prior to an instruction for updating data. The controller 31 acquires the set updated data.

In step S3613, the controller 31 updates the data file 111 stored in the user shared storage area 211 with the updated data stored in the temporary storage 333 under the control of the data write processing unit 314. That is, the controller 31 overwrites and saves the updated data as the data file 111 in the corresponding user shared storage area 211 via the network NW using the communication I/F 34. The controller 31 can acquire, from the area information storage 332, the shared area location of the user shared storage area 211 in which the shared data is to be updated, based on the workflow ID described in the workflow management table stored in the temporary storage 333. Thereafter, the controller 31 proceeds to the processing operation of step S3609, and updates the workflow management table stored in the temporary storage 333. For example, a history of an edition of the sharing destination is added.

In step S3614, the controller 31 determines that the input information is an instruction for a deletion of the shared data, and deletes the data file 111 which is the shared data from the user shared storage area 211, via the network NW using the communication I/F 34 under the control of the data write processing unit 314. The controller 31 can acquire, from the area information storage 332, the shared area location of the user shared storage area 211 from which the shared data is to be deleted, based on the workflow ID described in the workflow management table stored in the temporary storage 333. Thereafter, the controller 31 proceeds to the processing operation of step S3609, and updates the workflow management table stored in the temporary storage 333. For example, a history of a deletion of the sharing destination is added.

In step S3615, the controller 31 acquires the workflow management table stored in the temporary storage 333 under the control of the workflow management processing unit 312 and the data write processing unit 314. Then, the controller 31 saves the acquired workflow management table as the workflow management table 212 in the corresponding user shared storage area 211 via the network NW using the communication I/F 34. The controller 31 can acquire the shared area location of the user shared storage area 211 of the saving destination from the area information storage 332 based on the workflow ID described in the workflow management table stored in the temporary storage 333.

Thereafter, in step S3616, under the control of the data write processing unit 314, the controller 31 deletes the temporarily stored information stored in the temporary storage 333 in each processing operation in the shared area access processing in step S36. Then, the controller 31 ends the processing operation of the shared area access processing, and proceeds to the processing operation of step S37.

### (3) Shared Area Deletion Processing

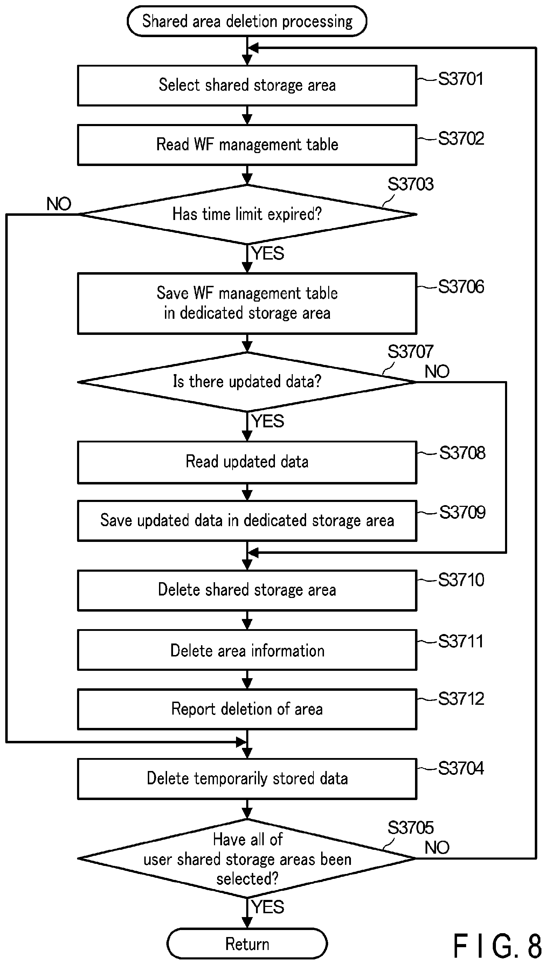

FIG. 8 is a flowchart showing an example of a processing procedure of the shared area deletion processing in the above step S37 that is performed by the controller 31 of the data management device 30.

First, in step S3701, the controller 31 selects one user shared storage area 211 as a processing target under the control of the workflow management processing unit 312 and the area management processing unit 313. For example, the controller 31 selects one piece of area information from among the pieces of area information related to the plurality of user shared storage areas 211 stored in the area information storage 332 to select the user shared storage area 211 as the processing target.

Next, in step S3702, the controller 31 reads out the workflow management table 212 from the selected user shared storage area 211 via the network NW using the communication I/F 34 under the control of the workflow management processing unit 312. The controller 31 can confirm the shared area location of the corresponding user shared storage area 211 from the area information related to the user shared storage area 211. The controller 31 stores the read workflow management table 212 in the temporary storage 333.

Then, in step S3703, under the control of the workflow management processing unit 312, the controller 31 determines whether or not the sharing time limit has expired based on the sharing time limit described in the workflow management table stored in the temporary storage 333. If it is determined that the sharing time limit has expired, the controller 31 determines YES in step S3703 and proceeds to the processing operation in step S3706. If it is determined that the sharing time limit has not expired, the controller 31 determines NO in step S3703, and proceeds to the processing operation in step S3704.

In step S3704, under the control of the area management processing unit 313, the controller 31 deletes the temporarily stored information stored in the temporary storage 333 in each processing operation in the shared area deletion processing in step S37.

Thereafter, in step S3705, under the control of the workflow management processing unit 312, the controller 31 determines whether or not all of the user shared storage areas 211 have been selected as processing targets. If it is determined that all the user shared storage areas 211 have been selected, the controller 31 determines YES in step S3705, ends the processing operation of the shared area deletion processing, and proceeds to the processing operation of step S31. If it is determined that all the user shared storage areas 211 have not been selected, the controller 31 determines NO in step S3705 and proceeds to the processing operation of step S3701 to select the user shared storage area 211 as a next processing target.

In step S3706, under the control of the workflow management processing unit 312, the controller 31 saves the workflow management table stored in the temporary storage 333 in the user dedicated storage area 11 of the user who is the data owner. The controller 31 can search the area information storage 332 for the user ID of the owner corresponding to the sharing source ID described in the workflow management table, and acquire the dedicated area location associated with the owner as the dedicated area location of the user dedicated storage area 11 of the saving destination.

Further, in step S3707, the controller 31 determines whether or not there is updated data in the corresponding user shared storage area 211 under the control of the workflow management processing unit 312. For example, whether or not there is updated data can be determined based on whether or not an edition of the sharing destination is described as a history in the workflow management table stored in the temporary storage 333. If it is determined that there is no updated data, the controller 31 determines NO in step S3707 and proceeds to the processing operation in step S3710. If it is determined that there is updated data, the controller 31 determines YES in step S3707 and proceeds to the processing operation in step S3708.

In step S3708, under the control of the data write processing unit 314, the controller 31 reads the updated data from the user shared storage area 211 confirmed in step S3702 via the network NW using the communication I/F 34, and stores the updated data in the temporary storage 333.

In step S3709, under the control of the data write processing unit 314, the controller 31 saves the updated data stored in the temporary storage 333 in the user dedicated storage area 11 via the network NW using the communication I/F 34. The user dedicated storage area 11 serving as the saving destination is the user dedicated storage area 11 of the user who is the data owner confirmed in step S3706. At this time, the file may be renamed by adding a character string indicating that data in the file is updated data or the like, so that the data stored in the user dedicated storage area 11 can be prevented from being overwritten.

In step S3710, the controller 31 deletes the selected user shared storage area 211 via the network NW using the communication I/F 34 under the control of the area management processing unit 313.

Further, in step S3711, under the control of the area management processing unit 313, the controller 31 deletes the area information related to the deleted user shared storage area 211 from the area information storage 332.

Then, in step S3712, under the control of the workflow management processing unit 312, the controller 31 reports the deletion of the user shared storage area 211, for example, by email, to the user who is the data owner of the shared data and the user who is the data user. Based on the sharing source ID and the sharing destination ID described in the workflow management table stored in the temporary storage 333, the controller 31 can acquire the contact information of the user ID from the setting information storage 331. If the shared data is updated and the updated data is saved in the user dedicated storage area 11 of the user who is the data owner in step S3709, this fact is also reported to the user who is the data owner. Thereafter, the controller 31 proceeds to the processing operation of step S3704.

### (Working Effects)

As described above, the data management device 30 according to the first embodiment of the present invention is a data management device configured to manage data sharing between a data owner who is a first user and a data user who is a second user. The data management device includes the communication I/F 34 configured to communicate with a user terminal 10 that is a first user terminal operated by the data owner and a user terminal 10 that is a second user terminal operated by the data user, and the controller 31 for controlling the data management device 30. The controller 31 includes the workflow management processing unit 312 configured to create a workflow for inputting information related to data to be shared from the user terminal 10 of the data user, cause at least part of the information related to the data to be input from the user terminal 10 of the data user through the workflow, and cause the user terminal 10 of the data owner to view the workflow after the input by the user terminal 10 of the data user. Further, in response to approval from the user terminal 10 of the data owner, the workflow management processing unit 312 permits the user terminal 10 of the data user to access a copy of the data stored in the user dedicated storage area 11 which is isolated from the data user and accessible only by the data owner, and which is stored in the user shared storage area 211 accessible only by the data owner and the data user.

Thus, the data user is made to input information necessary for sharing the data, while the data owner is only required to perform an approval operation, so that the data can be shared between the users with less workload on the data owner.

Furthermore, in the data management device 30 according to the first embodiment, the workflow management processing unit 312 creates a workflow in response to a workflow creation request, which is a share request, from the user terminal 10 of the data user, and causes the user terminal 10 of the data user to input at least part of the information related to data by the workflow. Then, the area management processing unit 313 of the data management device 30 creates the user shared storage area 211 in response to approval from the user terminal 10 of the data owner. The data write processing unit 314 of the data management device 30 causes the user shared storage area 211 to store a copy of the data stored in the user dedicated storage area 11.

Thus, in response to the share request from the data user, the data management device 30 creates the workflow, and in response to the approval of the data owner, the user shared storage area 211 and stores the data therein, so that the sharing of the data is automatically started only by the approval operation of the data owner.

The information related to the data to be shared includes at least a data ID for specifying the data, a sharing source ID for specifying a data owner, a sharing destination ID for specifying a data user, and a sharing time limit of the data. Then, the workflow management processing unit 312 of the data management device 30 causes the user shared storage area 211 to store the workflow management table 212 describing information related to the data input through the workflow. Based on the sharing time limit described in the workflow management table 212, the area management processing unit 313 deletes the user shared storage area 211 storing the data for which the sharing time limit has expired.

Therefore, the period during which data is shared by the user shared storage area 211 can be managed by the sharing time limit described in the workflow management table 212.

Furthermore, in the data management device 30 according to the first embodiment, the workflow management processing unit 312 adds an access history to the workflow management table 212 each time an access to a copy of data in the user shared storage area 211 from the user terminal 10 of the data user occurs. When deleting the user shared storage area 211, the area management processing unit 313 stores the workflow management table 212 in the user dedicated storage area 11 of the data owner for which the data is stored.

Therefore, the data owner can confirm the use history of the shared data by the data user even after the sharing is terminated.

### <Second Embodiment>

Next, a data management device 30 according to a second embodiment of the present invention will be described. In the first embodiment, a workflow is created in response to a share request from a data user. On the other hand, in the second embodiment, the data management device 30 automatically creates a workflow based on data stored in the user dedicated storage area 11 in a case where occurrence of any abnormality is detected.

Herein, only parts of the configuration example, operation example, and working effect that differ from those of the above first embodiment will be described, and descriptions of similar parts will be omitted.

### (Configuration Example)

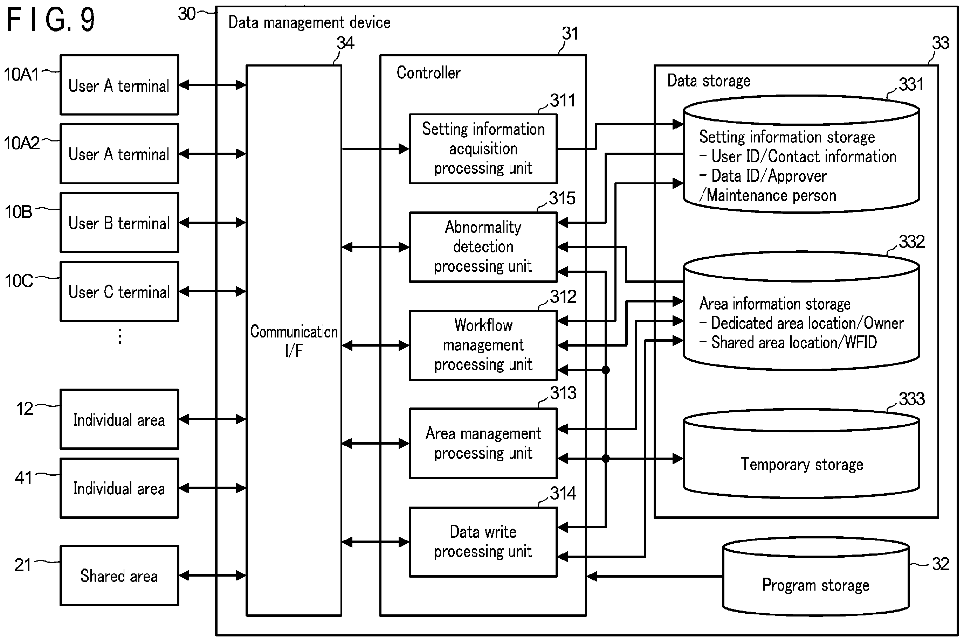

FIG. 9 is a block diagram showing an example of a software configuration of a data management device according to the second embodiment of the present invention.

In the present embodiment, the controller 31 of the data management device 30 includes an abnormality detection processing unit 315 in addition to the configuration of the first embodiment. The abnormality detection processing unit 315 monitors data that is stored in each user dedicated storage area 11 and is updated daily, such as operation log data of a machine, and performs processing for detecting an abnormality such as a failure in a data generation source machine based on the data content. A method of detecting an abnormality is not particularly limited here. For example, an abnormality can be detected by pattern matching with an abnormality pattern registered in advance, a deviation from daily data learned by AI, or the like. All the data stored in the user dedicated storage area 11 may be monitored; however, since monitoring of data for which abnormality detection is unnecessary is useless, it is desirable to determine data to be monitored in advance from the user terminal 10 of the data owner.

In the present embodiment, the setting information storage 331 of the data storage 33 further includes a maintenance person in the data setting information for each piece of data stored in the individual areas 12 and 41. The maintenance person is a user ID of a registered user who is registered as a manufacturer or a maintenance service contact of an apparatus that generates the data. If an abnormality such as a failure in the data generation source machine is detected based on the monitored data, the abnormality detection processing unit 315 further performs processing of reporting the abnormality detection to the data owner and the maintenance person of the data. The data owner can be specified by the approver in the data setting information stored in the setting information storage 331.

In addition, in the present embodiment, when the abnormality detection processing unit 315 detects an abnormality such as a failure in the data generation source machine based on the monitored data, the workflow management processing unit 312 performs processing of starting up the workflow for a sharing agreement for the data.

### (Operation Example)

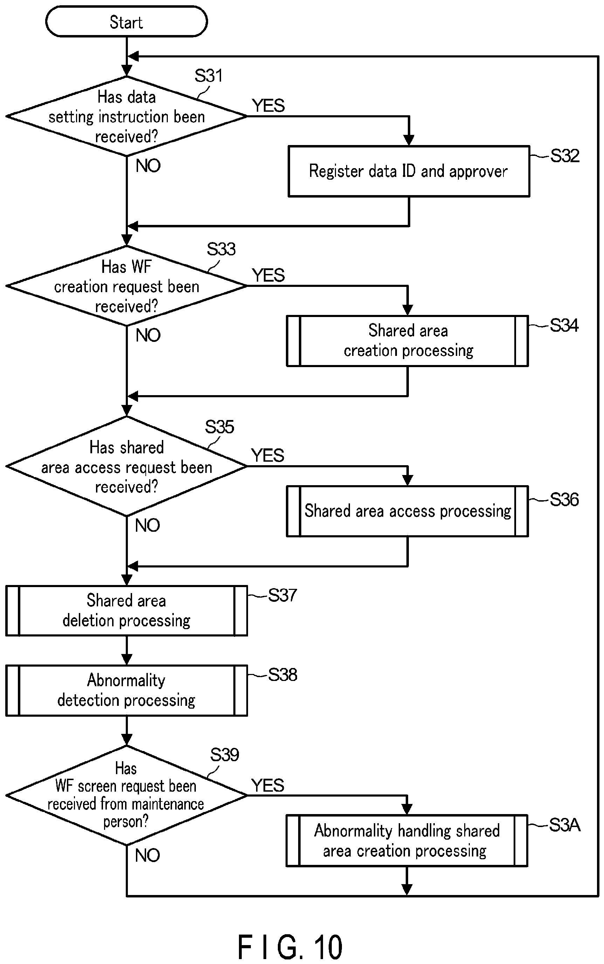

FIG. 10 is a flowchart showing an example of an overall processing procedure of shared area management processing performed by the data management device 30 according to the second embodiment.

In the present embodiment, if it is determined in step S35 that the shared area access request has not been received and the determination is NO, the controller 31 proceeds to the processing operation in step S38. Also, after the shared area access processing in step S36, the controller 31 proceeds to the processing operation in step S38.

In step S38, the controller 31 performs abnormality detection processing under the control of the workflow management processing unit 312, the area management processing unit 313, the data write processing unit 314, and the abnormality detection processing unit 315. This abnormality detection processing is a processing operation of performing abnormality detection based on data of an abnormality monitoring target stored in each user dedicated storage area 11, and if occurrence of an abnormality is detected, starting up a workflow and creating the user shared storage area 211, and transmitting an abnormality detection report for reporting the occurrence of the abnormality to the data owner and the maintenance person. Details of the abnormality detection processing will be described later. Thereafter, the controller 31 proceeds to the processing operation of step S39. The abnormality detection report to the maintenance person can include a workflow ID for specifying the workflow.

In step S39, under the control of the workflow management processing unit 312, the controller 31 determines whether or not a workflow screen request including a workflow ID has been received from the user terminal 10 of the maintenance person using the communication I/F 34 via the network NW. If it is determined that the workflow screen request from the maintenance person has not been received, the controller 31 determines NO in step S39, and proceeds to the processing operation of step S31. When it is determined that the workflow screen request from the maintenance person has been received, the controller 31 determines YES in step S39, and proceeds to the processing operation in step S3A.

The abnormality detection report transmitted by the abnormality detection processing in step S38 reaches both the owner of the data from which the abnormality has been detected and the maintenance person set for the data. The data owner and the maintenance person who have received the abnormality detection report can communicate with each other by a communication tool such as a telephone or email. Depending on the content of the abnormality that has occurred, it is necessary for the maintenance person to analyze the data. In such a case, a workflow screen request for requesting sharing of the data is transmitted from the user terminal 10 of the maintenance person to the data management device 30. For example, when the user terminal 10 of the maintenance person who has received the abnormality detection report including the workflow ID inputs the workflow ID in the share request operation on the menu screen after the user authentication, the workflow screen request including the workflow ID is transmitted instead of the workflow creation request.

In step S3A, the controller 31 performs abnormality handling shared area creation processing under the control of the workflow management processing unit 312 and the data write processing unit 314. The abnormality handling shared area creation processing is a processing operation of acquiring a sharing agreement with the data owner and saving data in the user shared storage area 211. Details of the abnormality handling shared area creation processing will be described later. Thereafter, the controller 31 proceeds to the processing operation of step S31.

### (1) Abnormality Detection Processing

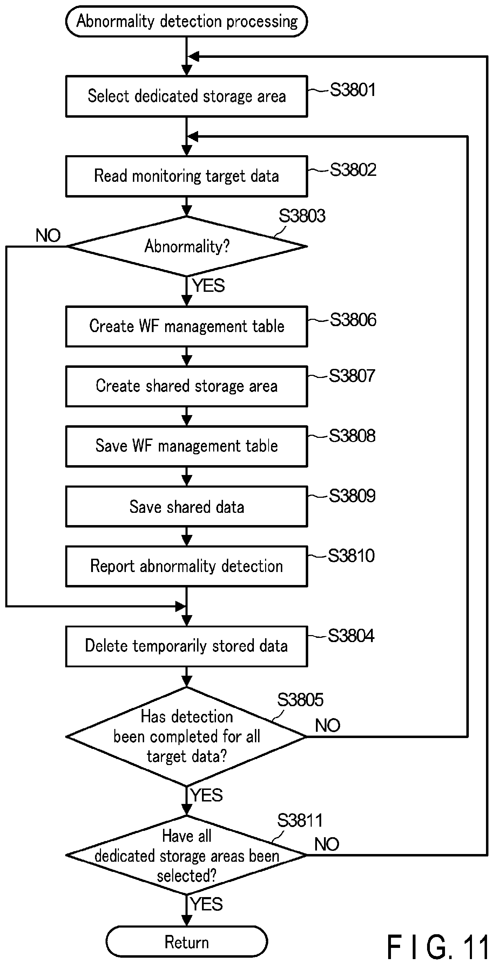

FIG. 11 is a flowchart showing an example of a processing procedure of the abnormality detection processing in the above step S38 that is performed by the controller 31 of the data management device 30.

First, in step S3801, the controller 31 selects one user dedicated storage area 11 as a processing target under the control of the abnormality detection processing unit 315. For example, the controller 31 selects one piece of area information from among the pieces of area information related to the plurality of user dedicated storage areas 11 stored in the area information storage 332, thereby selecting the user dedicated storage area 11 as the processing target.

Next, in step S3802, under the control of the abnormality detection processing unit 315, the controller 31 reads out a piece of monitoring target data, which is dedicated data, from the selected user dedicated storage area 11 via the network NW using the communication I/F 34, and stores the read data in the temporary storage 333. The controller 31 can confirm the dedicated area location of the user dedicated storage area 11 from the area information related to the user dedicated storage area 11.

Then, in step S3803, under the control of the abnormality detection processing unit 315, based on the monitoring target data stored in the temporary storage 333, the controller 31 determines the presence or absence of an abnormality such as a failure in the machine that has generated the monitoring target data. If it is determined that the occurrence of the abnormality is detected, the controller 31 determines YES in step S3803 and proceeds to the processing operation of step S3806. If it is determined that there is no abnormality, the controller 31 determines NO in step S3803, and proceeds to the processing operation of step S3804.

In step S3804, under the control of the abnormality detection processing unit 315, the controller 31 deletes the temporarily stored information stored in the temporary storage 333 in each processing operation in the abnormality detection processing in step S38.

Thereafter, in step S3805, under the control of the abnormality detection processing unit 315, the controller 31 determines whether or not the processing operation of abnormality detection has been completed for all the monitoring target data stored in the selected user dedicated storage area 11. If it is determined that the processing operation has been completed for all the monitoring target data, the controller 31 determines YES in step S3805 and proceeds to the processing operation in step S3811. On the other hand, if it is determined that the processing operation has not been completed yet for all the monitoring target data, the controller 31 determines NO in step S3805 and proceeds to the processing operation in step S3802 to read out next monitoring target data.

In step S3806, the controller 31 starts up a workflow under the control of the workflow management processing unit 312, that is, creates a workflow management table. In the workflow management table, a workflow ID, a sharing source ID, a sharing destination ID, a data ID, and a sharing time limit are described. Here, the workflow ID is automatically generated by the controller 31. The data ID is the data ID of the monitoring target data, and the controller 31 can acquire the approver and the maintenance person as the sharing source ID and the sharing destination ID from the setting information storage 331 based on the data ID. As the sharing time limit, the controller 31 automatically generates a predetermined number of days that is assumed to be a consultation period between the data owner and the maintenance person. The controller 31 stores the created workflow management table in the temporary storage 333.

In step S3807, under the control of the area management processing unit 313, the controller 31 creates, in the shared area 21 of the cloud storage 20, the user shared storage area 211 that is a storage area shared between the user terminal 10 of the data owner and the user terminal 10 of the maintenance person. In addition, the controller 31 causes the area information storage 332 to store area information about the user shared storage area 211. The creation of the user shared storage area 211 can be performed by the controller 31 transmitting an instruction to create the user shared storage area 211 to the cloud storage 20 via the network NW using the communication I/F 34 based on the workflow management table stored in the temporary storage 333. Thereafter, the controller 31 proceeds to a processing operation in step S3808.

In step S3808, under the control of the data write processing unit 314, the controller 31 saves the workflow management table stored in the temporary storage 333 as the workflow management table 212 in the corresponding user shared storage area 211 via the network NW using the communication I/F 34.

Furthermore, in step S3809, under the control of the data write processing unit 314, the controller 31 saves, as shared data, the monitoring target data stored in the temporary storage 333 in the corresponding user shared storage area 211 via the network NW using the communication I/F 34.

Then, in step S3810, under the control of the abnormality detection processing unit 315, the controller 31 transmits an abnormality detection report indicating that the occurrence of the abnormality has been detected to the approver who is the owner of the monitoring target data and the maintenance person who maintains the generation source machine that has generated the monitoring target data by, for example, email. The abnormality detection report to the maintenance person can include a workflow ID for specifying the workflow management table 212. Thereafter, the controller 31 proceeds to the processing operation of step S3804.

Further, in step S3811, under the control of the abnormality detection processing unit 315, the controller 31 determines whether or not all of the user dedicated storage areas 11 have been selected as processing targets. If it is determined that all the user dedicated storage areas 11 have been selected, the controller 31 determines YES in step S3 811, ends the processing operation of the abnormality detection processing, and proceeds to the processing operation of step S39. If it is determined that all the user dedicated storage areas 11 have not been selected, the controller 31 determines NO in step S3811 and proceeds to the processing operation of step S3801 to select the user dedicated storage area 11 as a next processing target.

In the processing operation of the abnormality detection processing, the user shared storage area 211 is created and the shared data and the workflow management table 212 are stored therein, but this is not reported to either the data owner or the maintenance person. Therefore, the data owner and the maintenance person cannot access the user shared storage area 211. Here, the monitoring target data in which the abnormality is detected is simply saved in the user shared storage area 211.

### (2) Abnormality Handling Shared Area Creation Processing

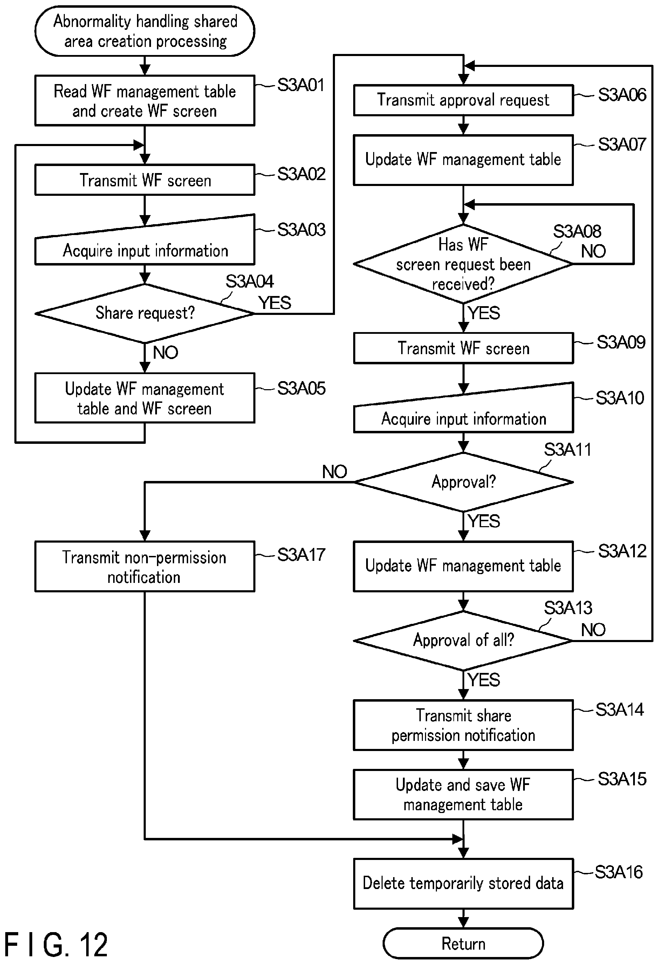

FIG. 12 is a flowchart showing an example of a processing procedure of the abnormality handling shared area creation processing in the above step S3A that is performed by the controller 31 of the data management device 30.

First, in step S3A01, under the control of the workflow management processing unit 312, the controller 31 reads out the workflow management table 212 from the user shared storage area 211 and creates a workflow screen. That is, based on the workflow screen request from the user terminal 10 of the maintenance person, the controller 31 reads out the workflow management table 212 from the corresponding user shared storage area 211 via the network NW using the communication I/F 34, and stores the read workflow management table in the temporary storage 333. Based on the workflow ID included in the workflow screen request, the controller 31 can check the user shared storage area 211, from which the workflow management table 212 is to be read, based on the shared area location stored in the area information storage 332 in association with the workflow ID.

Next, in step S3A02, under the control of the workflow management processing unit 312, in a similar manner as in step S3402 described above, the controller 31 transmits the workflow screen information to the user terminal 10 via the network NW using the communication I/F 34.

Then, in step S3A03, under the control of the workflow management processing unit 312, in a similar manner as in step S3403 described above, the controller 31 acquires, via the communication I/F 34, input information transmitted from the user terminal 10 via the network NW. The controller 31 stores the acquired input information in the temporary storage 333. In this case, the data to be shared, the data owner, and the like are already included in the workflow screen information transmitted to the user terminal 10. Therefore, the input information is either related to the setting of the sharing period or the share request.

In step S3A04, in a similar manner as in step S3404 described above, the controller 31 determines whether or not the input information is a share request under the control of the workflow management processing unit 312.

If it is determined that the input information is not a share request, in step S3A05, in a similar manner as in step S3405 described above, the controller 31 updates the workflow management table and the workflow screen information stored in the temporary storage 333 based on the input information stored in the temporary storage 333 under the control of the workflow management processing unit 312.

If it is determined in step S3A04 that the input information is a share request, the controller 31 performs a processing operation for acquiring approval of data sharing from all approvers in step S3A06 to step S3A13 under the control of the workflow management processing unit 312 in a similar manner as in step S3406 to step S3413.

Then, if approval of data sharing is obtained from all the approvers, in step S3A14, the controller 31 transmits the share permission notification to the maintenance person who is the data user using the communication I/F 34 via the network NW under the control of the workflow management processing unit 312, in a similar manner as in step S3416 described above. Since the user shared storage area has already been created and the shared data has been stored therein, it is not necessary to perform the processing operations such as those in step S3414 and step S3415.

Then, in step S3A15, in a similar manner as in step S3417 described above, the controller 31 updates the workflow management table stored in the temporary storage 333 under the control of the workflow management processing unit 312 and the data write processing unit 314. Then, the controller 31 saves the updated workflow management table as the workflow management table 212 in the corresponding user shared storage area 211 via the network NW using the communication I/F 34. The updating of the workflow management table here is to add a history of the share request, the approval, and the start of sharing, and to change the sharing time limit to the one designated by the maintenance person.

Thereafter, in step S3A16, under the control of the data write processing unit 314, the controller 31 deletes the temporarily stored information stored in the temporary storage 333 in each processing operation in the abnormality handling shared area creation processing in step S3A. Then, the controller 31 ends the processing operation of the abnormality handling shared area creation processing, and proceeds to the processing operation of step S31.

If it is determined in step S3A11 that the input information is disapproval, the controller 31 proceeds to the processing operation in step S3A17 as described above. In step S3A17, in a similar manner as in step S3419, the controller 31 transmits a share non-permission notification to the data user via the network NW using the communication I/F 34 under the control of the workflow management processing unit 312. Thereafter, the controller 31 proceeds to the processing operation of step S3A17.

### (3) Shared Area Deletion Processing

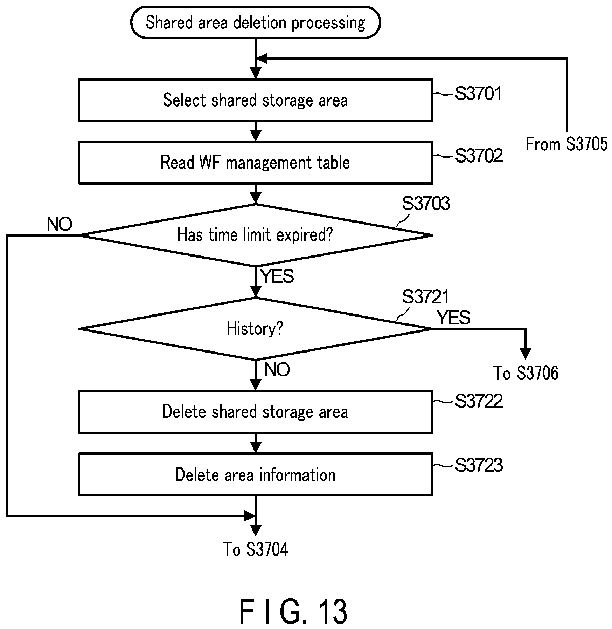

FIG. 13 is a flowchart showing an example of part of a processing procedure of the shared area deletion processing in the above step S37 that is performed by the controller 31 of the data management device 30. In order to deal with a case where a workflow screen request is not made from the maintenance person in response to the abnormality detection report, the present embodiment differs from the first embodiment in part of the processing procedure of the shared area deletion processing. The changed part will be described below.

If it is determined in step S3703 that the sharing time limit has expired, the controller 31 determines YES in step S3703 and proceeds to the processing operation of step S3721 in the present embodiment.

In step S3703, under the control of the workflow management processing unit 312, the controller 31 determines whether or not a history is described in the workflow management table stored in the temporary storage 333. If the workflow management table 212 is stored in the user shared storage area 211 created in the processing operation of the abnormality detection processing in step S38 but the maintenance person does not make a workflow screen request, no history is described in the workflow management table 212. Therefore, by determining the presence or absence of the history, it is possible to determine whether or not sharing is actually performed. If it is determined that the history has been described, the controller 31 determines YES in step S3721, and proceeds to the processing operation of step S3706. On the other hand, if it is determined that the history has not been described, the controller 31 determines NO in step S3721 and proceeds to the processing operation in step S3722.

In step S3722, the controller 31 deletes the selected user shared storage area 211 via the network NW using the communication I/F 34 under the control of the area management processing unit 313.

Further, in step S3723, under the control of the area management processing unit 313, the controller 31 deletes the area information related to the deleted user shared storage area 211 from the area information storage 332. Thereafter, the controller 31 proceeds to the processing operation of step S3704.

### (Working Effects)

As described above, in the second embodiment of the present invention, the data user is a maintenance person who maintains the generation source machine that has generated the data stored in the user dedicated storage area 11. The data management device 30 according to the second embodiment includes the abnormality detection processing unit 315, the area management processing unit 313, the data write processing unit 314, and the workflow management processing unit 312. The abnormality detection processing unit 315 monitors the data stored in the user dedicated storage area 11, detects the occurrence of an abnormality in the data generation source machine based on the monitored data, and reports the detection of the occurrence of the abnormality to the user terminals 10 of the data owner and the data user. The area management processing unit 313 creates the user shared storage area 211 in response to the detection of the occurrence of the abnormality. The data write processing unit 314 causes the user shared storage area 211 to store a copy of the data stored in the user dedicated storage area 11. The workflow management processing unit 312 creates a workflow in which information related to data to be shared is input in response to detection of an abnormality, causes the user terminal 10 of the data user to update and input at least part of the information related to the data through the workflow, causes the user terminal 10 of the data owner to view the workflow after the update and input by the user terminal 10 of the data user, and permits the user terminal 10 of the data user to access a copy of the data stored in the user shared storage area 211 in response to approval from the user terminal 10 of the data owner.

Therefore, the data management device 30 creates a workflow upon detection of occurrence of an abnormality based on the monitored data, and in response to the approval of the data owner for the workflow corrected by the data user who is the maintenance person, creates the user shared storage area 211 and stores the data therein, so that the sharing of the data is automatically started only by the approval operation of the data owner.

### <Other Embodiments>

In the first and second embodiments, all the user data is stored in the user shared storage area 211. The data stored in the user shared storage area 211 may not be all the user data. For example, it is possible to create a new file of data different from the original data by cutting out at least part of the data of the data file 111 or processing actual data into an anonymized or abstracted (generalized) format to create processed data. This new data file can be stored as shared data in the user shared storage area 211.

In the first and second embodiments, the user data in the user dedicated storage area 11 is copied to the user shared storage area 211. As described in Non-Patent Literature 2, the user data may be virtually stored by storing a symbolic link to the user data in the user shared storage area 211.

In the first and second embodiments, the user terminal 10 of the data user accesses the shared data stored in the user shared storage area 211 via the data management device 30. The user terminal 10 of the data user may access the shared data without going through the data management device 30. However, in this case, it is necessary for the data sharing system 1 to separately have a function of detecting that the user terminal 10 of the data user has accessed the user shared storage area 211 and notifying the data management device 30 of the access. Alternatively, the data sharing system 1 needs to separately have a function of updating the history of the workflow management table 212 in response to access from the user terminal 10.

In the first and second embodiments, the user shared storage area 211 is created for each piece of shared data. A plurality of shared data may be stored in one user shared storage area 211. In this case, the deletion of the user shared storage area 211 itself is suspended until all the shared data in the user shared storage area 211 is deleted. In this case, the workflow management tables 212 of the respective shared data may be merged.

The order of the processing steps shown in the flowcharts of FIGS. 5 to 8 and 10 to 13 is an example, and the present invention is not limited to this order. For example, the order of step S3406 and step S3407 in FIG. 6 may be reversed. Each processing step may be changed in processing order or the like or may be processed in parallel as long as there is no inconsistency with a preceding or succeeding processing step.

Although the embodiments of the present invention have been described in detail in the foregoing, the description is merely an example of the present invention in all of its aspects. Various improvements and modifications can be made without departing from the scope of the present invention. In other words, a specific configuration according to an embodiment may be adopted as appropriate when implementing the present invention.

The present invention should not be limited to the above-described embodiments as-is, but may be embodied by modifying the components without departing from the scope of the invention at the implementation stage. In addition, various inventions may be constituted by appropriately combining a plurality of components disclosed in the embodiments. For example, some components may be omitted from the components shown in the embodiments. Furthermore, the components of different embodiments may be suitably combined.

### REFERENCE SIGNS LIST

- 1: data sharing system
- 10: user terminal
- 10A1, 10A2: user A terminal
- 10B: user B terminal
- 10C: user C terminal
- 11A: user A dedicated storage area
- 11B: user B dedicated storage area
- 11C: user C dedicated storage area
- 12, 41: individual area
- 20, 40: cloud storage
- 21: shared area
- 30: data management device
- 31: controller
- 32: program storage
- 33: data storage
- 34: communication interface (communication I/F)
- 35: bus
- 41: individual area
- 111: data file
- 211: user share storage area
- 211₁: user A+B share storage area
- 211₂: user A+C share storage area
- 212: workflow management table
- 311: setting information acquisition processing unit
- 312: workflow management processing unit
- 313: area management processing unit
- 314: data write processing unit
- 315: abnormality detection processing unit
- 331: setting information storage
- 332: area information storage
- 333: temporarily storage
- NW: network

## Claims

1. A data management device for managing data sharing between a first user who is an owner of data and a second user who uses the data, the data management device comprising:
a communication interface for communicating with a first user terminal operated by the first user and a second user terminal operated by the second user; and
a controller for controlling the data management device,
the controller including a workflow management processing unit for:
creating a workflow for inputting information related to data to be shared from the second user terminal, and causing at least part of the information related to the data to be input from the second user terminal through the workflow;
causing the first user terminal to view the workflow after input by the second user terminal; and
in response to approval from the first user terminal, permitting the second user terminal to access a copy of the data stored in a dedicated storage area that is isolated from the second user and accessible only by the first user or a symbolic link to the data stored in the dedicated storage area, the copy or the symbolic link being stored in a shared storage area accessible only by the first user and the second user.

2. The data management device according to claim 1, wherein the workflow management processing unit creates the workflow in response to a share request from the second user terminal and causes the second user terminal to input the at least part of the information related to the data through the workflow,
the data management device further comprising:
an area management processing unit for creating the shared storage area in response to the approval from the first user terminal; and
a data write processing unit for causing the shared storage area to store the copy of the data stored in the dedicated storage area or the symbolic link to the data stored in the dedicated storage area.

3. The data management device according to claim 1, wherein the second user is a maintenance person who maintains a generation source machine that has generated the data stored in the dedicated storage area,
the data management device further comprising:
an abnormality detection processing unit for monitoring the data stored in the dedicated storage area, detecting occurrence of an abnormality in the generation source machine that has generated the data based on the monitored data, and reporting detection of the occurrence of the abnormality to the first and second user terminals;
an area management processing unit for creating the shared storage area in response to the detection of the occurrence of the abnormality; and
a data write processing unit for causing the shared storage area to store the copy of the data stored in the dedicated storage area or the symbolic link to the data stored in the dedicated storage area,
the workflow management processing unit:
in response to the detection of the occurrence of the abnormality, creates the workflow in which the information related to the data to be shared has been input;
causes at least part of the information related to the data to be updated and input from the second user terminal through the workflow;
causes the first user terminal to view the workflow after update and input by the second user terminal; and
in response to the approval from the first user terminal, permits the second user terminal to access the copy of the data stored in the shared storage area or the symbolic link to the data.

4. The data management device according to claim 2 or 3, wherein
the information related to the data to be shared includes at least a data ID that specifies the data, a sharing source ID that specifies the first user, a sharing destination ID that specifies the second user, and a sharing time limit for the data,
the workflow management processing unit causes the shared storage area to store a workflow management table that describes information related to the data input through the workflow, and
the area management processing unit deletes the shared storage area storing the data for which the sharing time limit has expired, based on the sharing time limit described in the workflow management table.

5. The data management device according to claim 4, wherein
each time an access from the second user terminal to the copy of the data in the shared storage area or the symbolic link to the data occurs, the workflow management processing unit adds an access history to the workflow management table, and
when deleting the shared storage area, the area management processing unit saves the workflow management table in the dedicated storage area of the first user in which the data is stored.

6. A data sharing system comprising:
a storage including the dedicated storage area and the shared storage area; and
the data management device according to any one of claims 1 to 5.

7. The data sharing system according to claim 6, wherein the storage includes a first storage device including the dedicated storage area, and a second storage device in which the shared storage area is formed and which is physically different from the first storage device.

8. A data sharing method for sharing data between a first user who is an owner of the data and a second user who uses the data, the method comprising,
by a computer,
creating a workflow for inputting information related to data to be shared from a second user terminal operated by the second user, and causing at least part of the information related to the data to be input from the second user terminal through the workflow,
causing a first user terminal operated by the first user to view the workflow after the input by the second user terminal, and
in response to approval from the first user terminal, permitting the second user terminal to access a copy of the data stored in a dedicated storage area that is isolated from the second user and accessible only by the first user or a symbolic link to the data stored in the dedicated storage area, the copy or the symbolic link being stored in a shared storage area accessible only by the first user and the second user.

9. A data management program for causing a computer to perform processing of each of the processing units included in the data management device according to any one of claims 1 to 5.
